# EUROPÄISCHE PATENTSCHRIFT

(11) **EP 4 610 057 B1**
(45) Veröffentlichungstag und Bekanntmachung des Hinweises auf die Patenterteilung: **27.05.2026**
(21) Anmeldenummer: 25159359.6
(22) Anmeldetag: 21.02.2025
(51) Int. Cl.: B60B 1/00, B60B 1/04, B60B 5/02

(54) **LAUFRADKOMPONENTE FÜR EIN FAHRRAD**
RUNNING WHEEL COMPONENT FOR A BICYCLE
COMPOSANT DE ROUE POUR UNE BICYCLETTE

(30) Priorität: 22.02.2024 DE 102024105067
(43) Veröffentlichungstag der Anmeldung: 03.09.2025
(73) Patentinhaber: DT Swiss AG, 2504 Biel (CH)
(72) Erfinder: Henig, Andreas, CH-2504 Biel (CH)
(74) Vertreter: BSB Patentanwälte Schütte & Engelen Partnerschaft mbB

(56) Entgegenhaltungen:
- EP-A1- 3 459 759
- US-A- 5 350 221
- US-B2- 10 493 796

## Beschreibung

Die Erfindung betrifft eine Laufradkomponente eines Fahrzeugs und insbesondere eines Fahrrads bzw. eines im bestimmungsgemäßen Regelbetrieb oder Normalbetrieb wenigstens teilweise muskelbetriebenen Zwei- oder Mehrrads und umfasst einen Speichennippel. Der Speichennippel weist einen Nippelkörper mit zwei gegenüberliegenden und voneinander entfernten Endabschnitten auf, um eine Speiche eines Laufrades mit einer Felge und eine Nabe des Laufrades lösbar zu verbinden.

Speichennippel werden bei Fahrrädern zur Befestigung von Speichen verwendet und können sowohl in der Felge als auch an der Nabe eingesetzt werden. Speichennippel dienen zur Abstützung der Speiche und zur Einstellung der Speichenspannung. Dazu werden sie mit einem Werkzeug gedreht, um den Speichennippel mit der Speiche zu verschrauben und die gewünschte Speichenspannung einzustellen und das Laufrad zu zentrieren.

Im Stand der Technik sind verschiedenste Speichennippel bekannt geworden. Diese werden in großen Mengen kostengünstig hergestellt und funktionieren zufriedenstellend. Ein gewisser Nachteil ist, dass bei Verwendung von Stahlspeichen und Aluminiumfelgen durch die unterschiedlichen Metalle bedingt eine Korrosionsproblematik auftreten kann. Dokument EP3459759A1 zeigt beispielsweise einen Speichennippel aus Edelstahl.

Es ist deshalb die Aufgabe der Erfindung eine Laufradkomponente mit einem Speichennippel zur Verfügung zu stellen, welche flexibler einsetzbar sind.

Diese Aufgabe wird gelöst durch eine Laufradkomponente mit einem Speichennippel mit den Merkmalen des Anspruchs 1. Bevorzugte Weiterbildungen der Erfindung sind Gegenstand der Unteransprüche.

Weitere Vorteile und Merkmale der vorliegenden Erfindung ergeben sich aus der allgemeinen Beschreibung und der Beschreibung der Ausführungsbeispiele.

Eine erfindungsgemäße Laufradkomponente eines Fahrzeugs und insbesondere eines im Regelbetrieb wenigstens teilweise muskelbetriebenen Zwei- oder Mehrrads wie eines Fahrrads umfasst einen Speichennippel. Der Speichennippel weist einen Nippelkörper mit zwei gegenüberliegenden und voneinander entfernten Endabschnitten auf, um eine Speiche eines Laufrades mit einer Felge oder einer Nabe eines Laufrades lösbar zu verbinden bzw. daran abzustützen. Einer der Endabschnitte bildet insbesondere einen Nippelkopf aus. Der Nippelkörper weist eine Aufnahme für ein Ende einer Speiche auf. An der Aufnahme umfasst der Nippelkörper ein Gewinde zur Befestigung einer Speiche. Der Nippelkörper weist wenigstens eine Werkzeuganlage auf, um eine Einstellung einer Speichenspannung zu ermöglichen. Der Nippelkörper ist aus einem Faserverbundwerkstoff gefertigt und umfasst Verstärkungselemente und wenigstens ein Matrixmaterial.

Die erfindungsgemäße Laufradkomponente hat viele Vorteile. Ein erheblicher Vorteil der erfindungsgemäßen Laufradkomponente mit einem Speichennippel besteht darin, dass ein besonders geringes Gewicht erzielbar ist.

Weiterhin ist die Laufradkomponente flexibel einsetzbar und kann bei Laufrädern eingesetzt werden, welche beispielsweise über Aluminiumfelgen und/oder Stahlspeichen verfügen. Der Einsatz ist auch möglich an Felgen und/oder Speichen aus einem Faserverbundwerkstoff. Möglich ist der Einsatz auch in gemischten Umgebungen mit beispielsweise Stahlspeichen und einer Felge aus Faserverbundwerkstoff.

In einer bevorzugten Weiterbildung sind die Endabschnitte einstückig mit dem Nippelkörper ausgebildet und bilden jeweils ein Ende des Nippelkörpers aus. Besonders bevorzugt sind wenigstens einige der Verstärkungselemente als Verstärkungsfasern ausgebildet. Die Verstärkungsfasern können als Kurzfasern (kürzere Verstärkungsfasern) oder als Langfasern (längere Verstärkungsfasern) ausgebildet sein. Langfasern erstrecken sich vorzugsweise nahezu oder vollständig durch eine Länge des Nippelkörpers. Kurzfasern können erheblich kürzer sein und weisen beispielsweise eine Länge zwischen 0,2 mm und zum Beispiel 5 mm oder 10 mm auf.

Vorzugsweise ist wenigstens ein Teil der Verstärkungselemente (in dem Speichennippel) durch Kurzfasern gebildet, die eine Länge aufweisen, die kürzer ist als die Hälfte einer Länge des Nippelkörpers. Besonders bevorzugt weisen Kurzfasern eine Länge zwischen 0,1 mm und 3 mm auf.

In bevorzugten Weiterbildungen ist es möglich, dass wenigstens ein Teil der Verstärkungselemente durch Faserschnitzel oder Faserverstärkungspartikel gebildet werden. Faserschnipsel können insbesondere flächige Elemente sein. Möglich ist auch der Einsatz von Kurzfasern. Als Verstärkungspartikel können auch Kugelelemente, unregelmäßige Partikel oder Pulverpartikel eingesetzt werden.

In besonders bevorzugten Ausgestaltungen ist das Matrixmaterial des Speichennippels insgesamt einheitlich. Das bedeutet, dass im gesamten Speichennippel das gleiche Matrixmaterial bzw. der gleiche Materialtyp eingesetzt wird. Wenn auch Speichen aus einem Faserverbundwerkstoff zusammen mit dem Speichennippel eingesetzt werden, ist das Matrixmaterial insbesondere gleich zu dem Matrixmaterial der Speiche.

Vorzugsweise unterscheidet sich das Material der Verstärkungselemente des Speichennippels in dem Gewindeabschnitt bzw. nah an dem Gewinde von dem Material der Verstärkungselemente entfernter von den Gewindegängen. So kann der Bereich des Gewindes noch einmal verstärkt werden.

In vorteilhaften Ausgestaltungen besteht wenigstens ein Teil der Verstärkungselemente aus Kohlefaser-, Carbonfaser- und/oder Glasfasermaterial.

In besonders bevorzugten Ausgestaltungen beträgt ein Anteil der Verstärkungselemente in dem Speichennippel wenigstens 20 % oder 25 % oder 30 %. Es sind auch Anteile von 35 % oder mehr möglich. Dabei bezieht sich die Prozentangabe auf einen Gewichtsanteil der Verstärkungselemente an dem gesamten Gewicht des Speichennippels.

Besonders bevorzugt wird als Matrixmaterial ein thermoplastisches Matrixmaterial eingesetzt.

Vorzugsweise umfasst der Nippelkopf eine Verdickung und ein abgerundetes Ende, um eine winkelmäßige Ausrichtung des Speichennippels zu ermöglichen. Besonders bevorzugt ist das abgerundete Ende an dem Nippelkopf ausgebildet, sodass der Nippelkopf bei flächiger Anlage an zum Beispiel einer Felge eine winkelmäßige Ausrichtung erlaubt.

Der Nippelkörper weist wenigstens eine Werkzeuganlage auf, um eine Einstellung einer Speichenspannung zu ermöglichen. Dazu kann der Nippelkörper entsprechende Oberflächen aufweisen, die beispielsweise in einer bestimmten Ausrichtung zueinanderstehen und so einen Vierkant oder Sechskant oder dergleichen zu Verfügung stellen.

In bevorzugten Ausgestaltungen ist der Nippelkörper an dem der Aufnahme gegenüberliegenden Ende geschlossen ausgebildet. Vorzugsweise ist das Gewinde als Innengewinde ausgebildet. Bei einem geschlossenen Ende ist dann die Aufnahme als Sackloch vorgesehen, in welchem das Innengewinde angeordnet ist. Das Ende kann ganz oder teilweise verschlossen sein.

Der Nippelkopf kann ein abgerundetes Ende aufweisen, um sich winkelmäßig ausrichten zu können. Der Nippelkopf kann dabei eine kugelförmige Gestalt annehmen, wobei er ganz am Ende auch abgeflacht sein kann.

Eine erfindungsgemäße Laufradkomponente wird insbesondere durch ein Spritzgussverfahren hergestellt, bei dem ein Faserverbundwerkstoff mit einem flüssigen Matrixmaterial und Verstärkungselementen in eine Herstellform eingespritzt wird. Der Faserverbundwerkstoff wird abgekühlt und die Laufradkomponente schließlich entnommen.

In allen Ausgestaltungen wird die Erfindung besonders bevorzugt bei solchen Fahrzeugen und insbesondere Fahrrädern eingesetzt, die im normalen und regelmäßigen bestimmungsgemäßen Betrieb wenigstens teilweise muskelbetrieben werden. Insbesondere wird die Erfindung bei sportlichen Fahrrädern eingesetzt.

Weitere Vorteile ergeben sich aus den Ausführungsbeispielen, die im Folgenden mit Bezug auf die beiliegenden Figuren erläutert werden.

In den Figuren zeigen:
- Figur 1: eine schematische Darstellung eines Rennrades;
- Figur 2: eine schematische Darstellung eines Mountainbikes;
- Figuren 3-7: schematische Schnittdarstellungen von Speichen;
- Figuren 8-10: Seitenansichten und eine perspektivische Ansicht einer Speiche; und
- Figuren 11-13: schematische Ansichten eines Speichennippels.

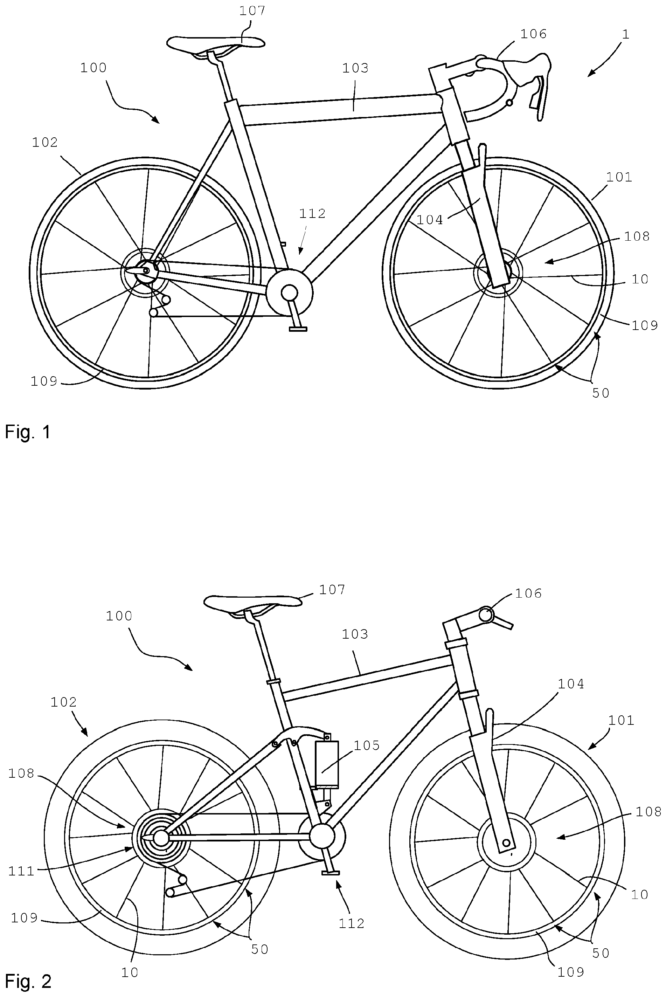

In den Figuren 1 und 2 sind jeweils ein Mountainbike bzw. ein Gravel-Fahrrad oder Rennrad 100 dargestellt, die jeweils mit erfindungsgemäßen Laufradkomponenten 1 ausgerüstet sind. Das Mountainbike bzw. Rennrad 100 verfügt jeweils über ein Vorderrad 101 und ein Hinterrad 102.

Die beiden Räder 101, 102 verfügen über Speichen 10. Eine Ritzeleinrichtung 111 ist vorgesehen. Grundsätzlich können konventionelle Felgenbremsen oder auch andere Bremsen wie zum Beispiel Scheibenbremsen vorgesehen sein.

Die Fahrräder 100 verfügen jeweils über einen Rahmen 103, einen Lenker 106, einen Sattel 107, eine Gabel bzw. eine Federgabel 104 und im Falle des Mountainbikes oder einem Rennrad oder Gravel-Fahrrad (Gravelbike) kann ein Hinterraddämpfer 105 vorgesehen sein. Zum Antrieb dient eine Tretkurbel 112 mit Pedalen. Gegebenenfalls kann ein elektrischer Hilfsantrieb an der Tretkurbel 112 und/oder den Rädern vorgesehen sein. Die Nabe der Räder kann jeweils über eine Spanneinrichtung wie zum Beispiel eine Steckachse oder einen Schnellspanner an dem Rahmen befestigt sein.

In den Figuren 1 und 2 sind anmeldungsgemäße Laufradkomponente 1 mit Speichen 10 und Speichennippeln 50 zu erkennen. Die Speichen verbinden die Nabe 108 mit der Felge 109. Hier sind die Speichennippel 50 im Innenraum der Hohlkammerfelge 109 aufgenommen, sodass sie in der Seitenansicht nicht sichtbar sind.

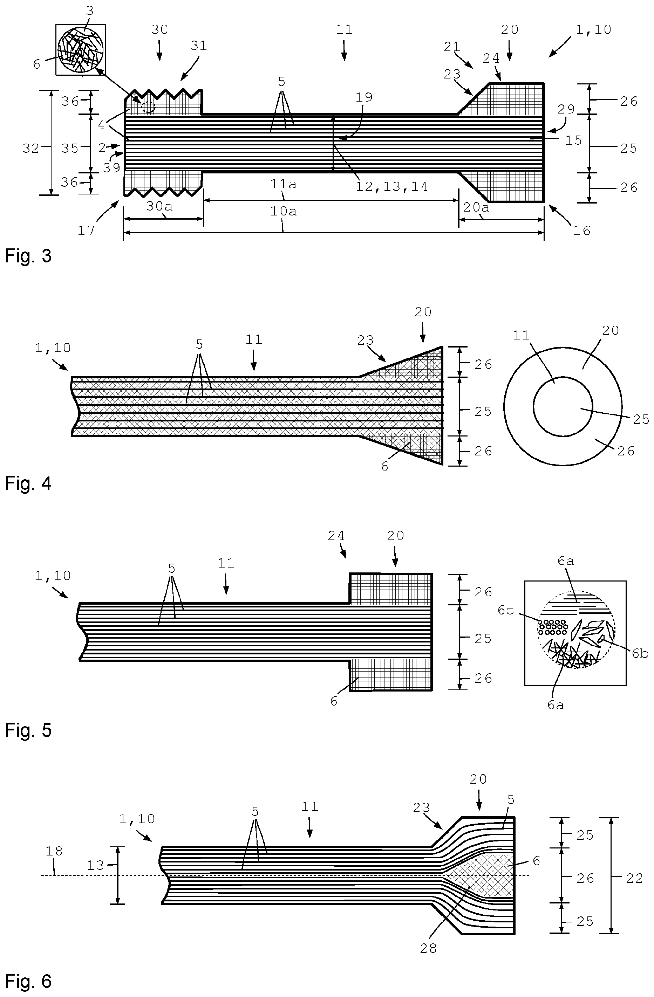

In den Figuren 3 bis 10 sind unterschiedliche anmeldungsgemäße Laufradkomponenten 1 gebildet, die als Speichen 10 ausgeführt sind. In Figur 3 ist ein Querschnitt durch eine Speiche 10 dargestellt, die ein langgestrecktes Mittelstück 11 und zwei Endstücke 20, 30 aufweist. Die Speiche 10 ist insgesamt einstückig ausgearbeitet und der Speichenkörper 15 weist keinerlei Trennflächen zwischen den Endstücken 20, 30 und dem Mittelstück 11 auf.

Die Speiche 10 besteht aus einem Faserverbundwerkstoff 2 und umfasst ein Matrixmaterial 3 und Verstärkungselemente 4. Dabei erstrecken sich Langfasern 5 (wenigstens nahezu) vollständig über die Länge 10a der Speiche 10 zentrisch durch das Endstück 30, das Mittelstück 11 und das Endstück 20 am anderen Ende der Speiche 10. Ganz am Ende können die Langfasern 5 abgedeckt sein, sodass sie von außen nicht erkennbar sind.

Es sei darauf hingewiesen, dass in den Figuren 3-10 die Laufradkomponente 1 mit der Speiche 10 nicht maßstäblich dargestellt ist, um die einzelnen Teile und Komponenten der Speiche 10 deutlicher zeigen zu können. In Realität weist die Speiche 10 eine Länge 10a von zum Beispiel 290 mm oder 300 mm auf und kann, wenn sie nicht aerodynamisch ausgebildet ist, beispielsweise einen Durchmesser zwischen 1 mm und 3 mm oder 4 mm aufweisen. Auch andere Abmessungen sind möglich. Diese Abmessungen werden hier auch angegeben, um zu verdeutlichen, dass die Abbildungen nicht maßstabsgetreu dargestellt sind.

In Figur 3 ist zu erkennen, dass das Endstück 30 über einen Gewindeabschnitt 31 verfügt, welcher als Außengewinde ausgebildet ist und sich hier über die vollständige Breite bzw. Länge 30a des Endstücks 30 erstreckt. Das andere Endstück 20 verfügt über einen Konusabschnitt 23, der an das Mittelstück 11 angrenzt und über einen Stütz- oder Zylinderabschnitt 24, der sich an den Konusabschnitt 23 anschließt und bis zum Ende der Speiche reicht.

In einfachen Ausgestaltungen ist das Mittelstück 11 rund ausgebildet, sodass die minimale Querabmessung 12, die mittlere Querabmessung 13 und die maximale Querabmessung 14 jeweils einen gleichen Wert aufweisen und hier dem Durchmesser des Mittelstücks 11 entsprechen. In anderen Ausgestaltungen kann die Speiche 11 z.B. aerodynamisch ausgebildet sein, sodass sich die minimale, mittlere und maximale Querabmessung 12-14 jeweils voneinander unterscheidet.

Über die vollständige Länge der Speiche 10 erstrecken sich die Langfasern 5 als Verstärkungselemente 4. Dabei befinden sich die Langfasern 5 in den Endstücken 20, 30 jeweils nur in dem (zentrischen) Querschnittsbereich 25 an dem Endstück 20 und dem zentrischen Querschnittsbereich 35 an den Endstücken 30.

An den Endstücken 30 schließt sich radial nach außen an den Querschnittsbereich 35 der Querschnittsabschnitt 36 an, der ebenfalls aus einem Faserverbundwerkstoff 2 besteht und hier über das gleiche Matrixmaterial 3 verfügt wie auch das Mittelstück 11.

Im Unterschied zum Mittelstück 11 und den Querschnittsbereichen 25, 35, werden in den Querschnittsabschnitten 26, 36 gar keine oder (nur) kürzere Verstärkungselemente eingesetzt, die hier aus Kurzfasern 6a oder Faserschnipseln 6b und/oder Verstärkungspartikeln 6c bestehen können.

In einfachen Ausgestaltungen werden Kurzfasern 6a zusammen mit einem Matrixmaterial 3 an den Enden 16, 17 angespritzt, wobei das Matrixmaterial 23 wenigstens dort zunächst wieder aufgeschmolzen wird, sofern es sich zuvor schon (etwas) verfestigt hatte. Durch diese Herstellung bedingt entstehen zwischen dem Querschnittsabschnitt 36 und dem Querschnittsbereich 35 innerhalb des Matrixmaterials 3 keine separaten Grenzflächen oder Klebeflächen oder Oberflächen. Ein Übergang zwischen den Querschnittsbereich 35 und zum Beispiel dem Querschnittsabschnitt 36 ist nur durch die Veränderung des eingebetteten Verstärkungsmaterials verstellbar. Das führt zu einer besonders hohen Belastbarkeit der anmeldungsgemäßen Laufradkomponente 1.

Bei dem Ausführungsbeispiel nach Figur 3 befinden sich in den Zentralbereichen 29, 39 der Endstücke die Langfasern 5.

In Figur 4 ist ein etwas anderes Ausführungsbeispiel einer anmeldungsgemäßen Laufradkomponente 1 mit einer Speiche 10 dargestellt, wobei hier nur das Endstück 20 und ein Teil des Mittelstücks 11 abgebildet ist.

Im Unterschied zu Figur 3 ist hier das Endstück 20 insgesamt kegelförmig ausgebildet. Auch hier ist der Querschnittsbereich 25 von Langfasern 5 durchsetzt, während sich radial nach außen der Querschnittsabschnitt 26 mit dem gleichen Matrixmaterial 3, aber kürzeren Verstärkungselementen 6, anschließt. Das Endstück 20 bildet auch hier den Kopfabschnitt 21 der Speiche 10 und dient zur Abstützung der Speiche an der Felge oder der Nabe.

Wie die schematische Skizze im rechten Teil von Figur 4 zeigt, sind im Ausführungsbeispiel nach Figur 4 sowohl das Mittelstück 11 als auch das Endstück 20 rotationssymmetrisch ausgebildet. Auch hier ist es möglich, dass das Mittelstück 11 aerodynamisch ausgebildet ist, sodass dann die Querschnittsform von der Kreisform abweicht.

Figur 5 zeigt eine weitere Variante einer Speiche 10 als Laufradkomponente 1, bei der das Endstück 20 über keinen Konusabschnitt 23, sondern hier nur einen rechtwinklig abstehenden Stütz- oder Zylinderabschnitt 24 verfügt.

Im rechten Teil von Figur 5 sind beispielhaft einige unterschiedliche Verstärkungselemente 6a, 6b und 6c eingezeichnet, die in dem Querschnittsabschnitt 26 an dem Endstück 20 (und in dem Querschnittsabschnitt 36 des anderen Endstücks 30) eingesetzt werden können.

Dabei können sowohl wirr angeordnete kürzere Verstärkungselemente 6a als auch gleichgerichtet ausgerichtete Verstärkungselemente 6a in kurzer Form als auch Faserschnipsel 6b in gleicher oder unterschiedlicher Orientierung und auch Verstärkungspartikel 6c eingesetzt werden. Möglich ist auch eine Kombination unterschiedlicher Verstärkungselemente 6a, 6b und 6c.

Figur 5 zeigt nur ein Endstück 20. Das andere Endstück 30 kann identisch ausgebildet sein. Oder beide Endstücke 20, 30 weisen jeweils (auch) einen Gewindeabschnitt 31 auf. Die Form eines oder beider Endstücke kann ausgebildet sein, wie in Fig. 3, 4 oder 5 abgebildet. Ein Laufrad kann unterschiedliche Speichen umfassen.

Figur 6 zeigt eine Variante einer Laufradkomponente mit einer Speiche 10, wobei hier an dem Endstück 20 nach der Pultrusion das Ende 16 aufgeschmolzen und ein konusähnliches Element eingeführt wird, wobei der Hohlraum nach dem Entfernen einen konusähnlichen Abschnitt 28 hinterlässt, der mit einem Faserverbundwerkstoff 2 und einem Matrixmaterial 3 und Verstärkungselementen 4 aufgefüllt wird. Zentral wird hier der Querschnittsabschnitt 26 mit kürzeren Verstärkungselementen 6 zur Verfügung gestellt, während sich die Langfasern 5 in dem Querschnittsbereich 25 dann ringförmig um den Querschnittsabschnitt 26 erstrecken. Insgesamt ist das Endstück so auf einen Durchmesser 22 aufgeweitet.

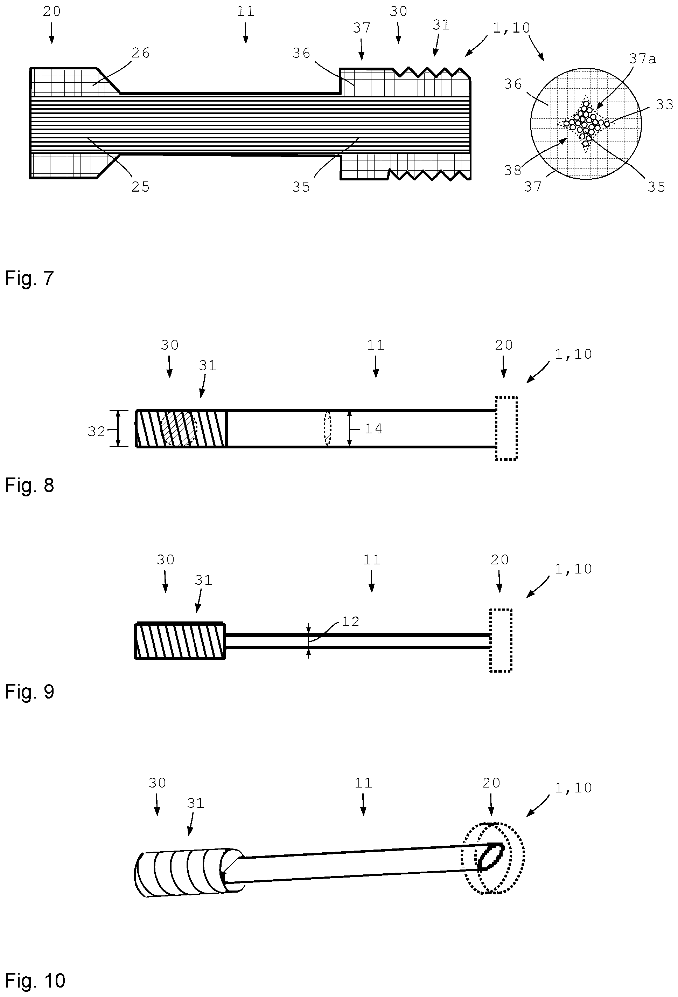

Figur 7 zeigt eine weitere Variante, wobei hier das Endstück 30 länger ausgebildet ist bzw. wobei sich hier der Gewindeabschnitt 31 nicht über die vollständige Länge des Endstücks 30 erstreckt. Es schließt sich ein Endabschnitt 37 an, der hier zylindrisch ausgebildet ist.

Auch in Figur 7 sind die Langfasern 5 über die vollständige Länge der Speiche 10 vorgesehen und erstrecken sich praktisch vollständig über die Länge der Endstücke 20, 30 und des Mittelstücks 11.

Im rechten Teil von Figur 7 ist ein Querschnitt in dem Endabschnitt 37 abgebildet. Hier wird deutlich, dass die im Mittelstück 11 innerhalb eines Kreises angeordneten Verstärkungselemente 4 in dem Endstück 30 (und gegebenenfalls auch in dem Endstück 20) eine andere Querschnittsform einnehmen. Und zwar wird die Querschnittsform unrund ausgestaltet, sodass sich ein abweichender Querschnitt 37a ergibt, der hier einem Rechteck ähnelt, welches an den Seitenflächen Einbeulungen aufweist. Die gestrichelt eingezeichnete Hüllkurve 33 umgibt die Verstärkungselemente 4 möglichst eng und ist nur eingezeichnet, um die Form zu verdeutlichen. Real gibt es diese Hüllkurve nicht. Es handelt sich nicht um eine separate Schicht. Der Speichenkörper ist werkstoffeinstückig gefertigt. Die Querschnittsform kann auch als sternförmig bezeichnet werden. Dadurch wird die Übertragung eines höheren Drehmoments ermöglicht, was bei der Einstellung der Speichenspannung von Vorteil ist.

Es sind auch andere abweichende Querschnittsformen für den Querschnittsbereich bzw. Langfaserbereich 35 möglich, so kann dessen Querschnittsform auch dreieckig oder oval oder T-förmig oder V-, oder W-förmig oder dergleichen ausgebildet sein.

In den Figuren 8-10 ist eine weitere Laufradkomponente mit einer Speiche 10 abgebildet, wobei Figuren 8 und 9 zwei Seitenansichten zeigen, wobei klar wird, dass die Speiche 10 aerodynamisch ausgestaltet ist, sodass die minimale Querabmessung 12 erheblich geringer ist als die maximale Querabmessung 14 in dem Mittelstück 11.

An den Enden 16, 17 ist die Speiche 10 an den Endstücken 20, 30 jeweils wieder rund ausgebildet und verfügt an dem Endstück 30 über einen Gewindeabschnitt 31. Der Außendurchmesser 32 an dem Endstück 30 kann der maximalen Querabmessung 14 in dem Mittelstück 11 entsprechen.

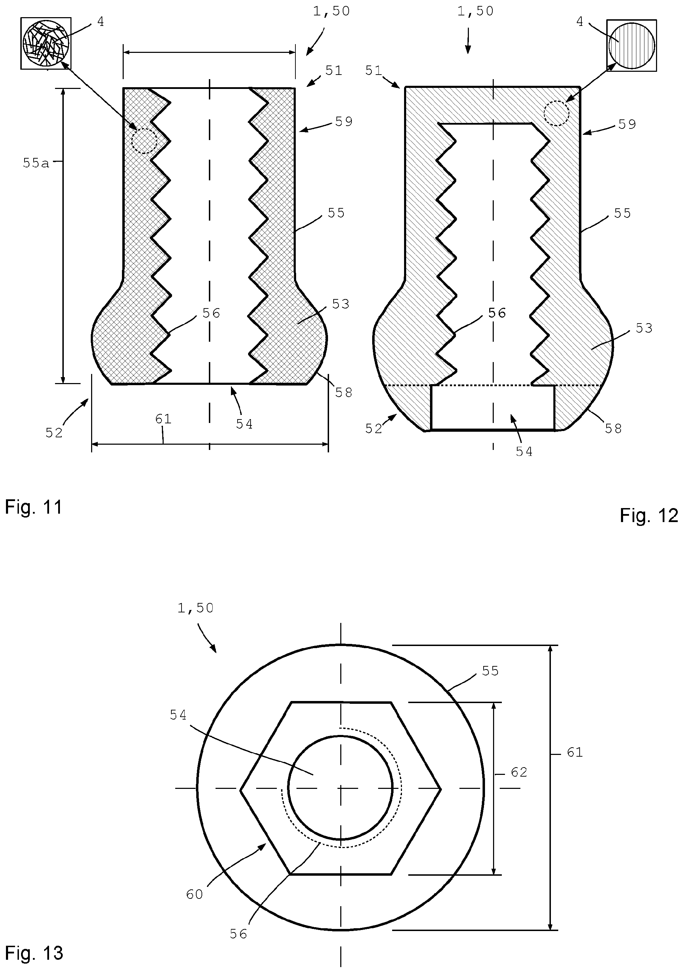

In den Figuren 11, 12 und 13 ist eine anmeldungsgemäße Laufradkomponente 1 mit einem Speichennippel 50 abgebildet. Dabei zeigen die Figuren 11 und 12 zwei leicht unterschiedliche Ausführungsbeispiele jeweils in einem Querschnitt.

Der Speichennippel 50 besteht jeweils aus einem Faserverbundwerkstoff 2 mit einem Matrixmaterial 3 und Verstärkungselementen 4. Die Verstärkungselemente 4 können als Langfasern 5 oder als kürzere Verstärkungselemente 6 ausgebildet sein.

Der Speichennippel 50 verfügt über einen Nippelkörper 55, der sich über eine Länge 55a erstreckt, die zum Beispiel 10 mm betragen kann. Möglich sind auch etwas kürzere und auch etwas längere Ausgestaltungen. Der Nippelkörper 55 weist eine größere Länge 55a als ein Durchmesser 61 des Nippelkörpers auf.

Der Nippelkörper verfügt über Endabschnitte 51 und 52 an den Enden 58 und 59. An dem Ende 58 ist der Nippelkopf 53 ausgebildet, der abgerundet ausgebildet ist und die Anlagefläche zur Verfügung stellt, an der sich der Nippel zum Beispiel an der Felge abstützt.

An dem Nippelkopf 53 ist eine Aufnahme 54 für das Gewindeende einer Speiche ausgebildet. In der Aufnahme ist ein Innengewinde 56 ausgebildet. Über das Gewinde 56 kann der Nippelkopf 53 auf ein Speichenende aufgeschraubt werden. Die Aufnahme 54 kann als Durchgangsöffnung ausgebildet sein. Es ist auch möglich, dass das andere Ende 51 teilweise oder ganz verschlossen ist. Dann ist die Aufnahme 54 ein Sackloch.

Figur 13 zeigt eine Draufsicht auf den Endabschnitt 51 des Speichennippels 50. Dadurch ist die Werkzeuganlage 60 mit der Schlüsselweite 62 an dem Nippelkörper 55 zu sehen. Zentral ist die Aufnahme 54 zu erkennen, in der das Gewinde 56 ausgebildet ist.

Durch den Einsatz von Speichennippeln 50 aus Faserverbundwerkstoff kann ein leichterer Speichennippel zur Verfügung gestellt werden, der weiterhin auch eine mögliche Kontaktkorrosion verschiedener Metalle miteinander zuverlässig verhindert. Insbesondere, wenn Verstärkungselemente mit einem Glasfaseranteil eingesetzt werden, werden derartige Probleme zuverlässig verhindert.

In allen Ausgestaltungen wird eine stoffschlüssige und werkstoffeinstückige Verbindung erzielt.

Bei der Herstellung von Speichennippel 50 können beispielsweise in einer Herstellform 20, 30, 40 oder mehr Kavitäten gleichzeitig gefüllt werden, sodass nach der Herstellung eines Werkzeugs eine kostengünstige Herstellung möglich ist.

Das Gewinde wird bei den Laufradkomponenten unmittelbar in dem Faserverbundwerkstoff zur Verfügung gestellt.

### Bezugszeichenliste:

| | | | |
|---|---|---|---|
| 1 | Laufradkomponente | 32 | Außendurchmesser |
| 2 | Faserverbundwerkstoff | 33 | Hüllkurve |
| 3 | Matrixmaterial | 35 | Querschnittsbereich, Langfaserbereich |
| 4 | Verstärkungselemente | | |
| 5 | Langfaser | 36 | Querschnittsabschnitt Kurzfaserabschnitt |
| 6 | kürzere | | |
| | Verstärkungselemente | 37 | Endabschnitt |
| 6a | Kurzfasern | 37a | abweichender Querschnitt |
| 6b | Faserschnipsel | 38 | konusähnlicher Abschnitt |
| 6c | Verstärkungspartikel | 39 | Zentralbereich |
| 7 | Längsachse | 50 | Speichennippel |
| 10 | Speiche | 51 | Endabschnitt |
| 10a | Länge von 10 | 52 | Endabschnitt |
| 11 | Mittelstück | 53 | Nippelkopf |
| 11a | Länge von 11 | 54 | Aufnahme |
| 12 | Querabmessung (minimal) | 55 | Nippelkörper |
| 13 | Querabmessung (mittel) | 55a | Länge |
| 14 | Querabmessung (maximal) | 56 | Gewinde |
| 15 | Speichenkörper | 58 | Ende (abgerundet) |
| 16 | Ende | 59 | Ende (Werkzeugende) |
| 17 | Ende | 60 | Werkzeuganlage |
| 19 | Zentralbereich | 61 | Durchmesser |
| 20 | Endstück | 62 | Schlüsselweite |
| 20a | Länge von 20 | 100 | Fahrrad |
| 21 | Kopfabschnitt | 101 | Rad, Vorderrad |
| 22 | Außendurchmesser | 102 | Rad, Hinterrad |
| 23 | Konusabschnitt | 103 | Rahmen |
| 24 | Stütz-, Zylinderabschnitt | 104 | Gabel, Federgabel |
| 25 | Querschnittsbereich | 105 | Hinterraddämpfer |
| 26 | Querschnittsabschnitt | 106 | Lenker |
| 28 | konusähnlicher Abschnitt | 107 | Sattel |
| 29 | Zentralbereich | 108 | Nabe |
| 30 | Endstück | 109 | Felge |
| 30a | Länge von 30 | 111 | Ritzeleinrichtung |
| 31 | Gewindeabschnitt | 112 | Tretkurbel |

## Patentansprüche

1. Laufradkomponente (50) eines Fahrzeugs und insbesondere ein Fahrrads, umfassend einen Speichennippel (50) mit einem Nippelkörper (55) und zwei gegenüberliegenden und voneinander entfernten Endabschnitten (51, 52), um eine Speiche (10) eines Laufrades (101, 102) mit einer Felge (10) oder einer Nabe (108) eines Laufrades (101, 102) lösbar zu verbinden, wobei einer der Endabschnitte (51, 52) einen Nippelkopf (53) ausbildet und wobei der Nippelkörper (55) eine Aufnahme (54) für ein Ende (30) einer Speiche (10) aufweist und an der Aufnahme (54) ein Gewinde (56) zur Befestigung einer Speiche (10) umfasst,
**dadurch gekennzeichnet,**
**dass** der Nippelkörper (55) aus einem Faserverbundwerkstoff (2) gefertigt ist und Verstärkungselemente (4) und wenigstens ein Matrixmaterial (3) umfasst, und dass der Nippelkörper (55) wenigstens eine Werkzeuganlage (60) aufweist, um eine Einstellung einer Speichenspannung zu ermöglichen.

2. Laufradkomponente (50) nach dem vorhergehenden Anspruch, wobei die Endabschnitte (51, 52) einstückig mit dem Nippelkörper (55) ausgebildet sind und jeweils ein Ende (58, 59) des Nippelkörpers (55) bilden.

3. Laufradkomponente (50) nach einem der beiden vorhergehenden Ansprüche, wobei wenigstens einige der Verstärkungselemente (4) als Verstärkungsfasern (5, 6) ausgebildet sind und sich durch eine Länge (55a) des Nippelkörpers (55) erstrecken.

4. Laufradkomponente (50) nach einem der drei vorhergehenden Ansprüche, wobei wenigstens ein Teil der Verstärkungselemente (4) durch Kurzfasern (6a) gebildet wird, die eine Länge (57) aufweisen, die kürzer ist als die Hälfte einer Länge (55a) des Nippelkörpers (55).

5. Laufradkomponente (50) nach einem der vier vorhergehenden Ansprüche, wobei wenigstens ein Teil der Verstärkungselemente (4) durch Faserschnipsel (6b) oder Verstärkungspartikel (6c) gebildet werden.

6. Laufradkomponente (50) nach einem der fünf vorhergehenden Ansprüche, wobei das Matrixmaterial (3) des Speichennippels (50) einheitlich ist.

7. Laufradkomponente (50) nach einem der vorhergehenden Ansprüche, wobei sich das Material der Verstärkungselemente (4) des Speichennippels (50) in dem Gewindeabschnitt von dem Material der Verstärkungselemente (4) entfernt davon unterscheidet.

8. Laufradkomponente (50) nach einem der vorhergehenden Ansprüche, wobei wenigstens ein Teil der Verstärkungselemente (4) aus Kohlefaser-, Carbonfaser- und/oder Glasfasermaterial besteht.

9. Laufradkomponente (50) nach einem der vorhergehenden Ansprüche, wobei ein Anteil der Verstärkungselemente (4) in dem Speichennippel größer 20% oder 25% beträgt.

10. Laufradkomponente (50) nach einem der vorhergehenden Ansprüche, wobei das Matrixmaterial ein thermoplastisches Matrixmaterial umfasst.

11. Laufradkomponente (50) nach einem der vorhergehenden Ansprüche, wobei der Nippelkopf (53) eine Verdickung umfasst und ein abgerundetes Ende (58) aufweist, um eine winkelmäßige Ausrichtung bei flächiger Anlage des Nippelkopfes an z.B. einer Felge zu ermöglichen.

12. Laufradkomponente (50) nach einem der vorhergehenden Ansprüche, wobei der Nippelkörper (55) an dem der Aufnahme (54) gegenüberliegenden Ende (59) geschlossen ist.

13. Laufradkomponente (50) nach einem der vorhergehenden Ansprüche, hergestellt durch ein Spritzgußverfahren, bei dem ein Faserverbundwerkstoff (2) mit einem flüssigen Matrixmaterial (3) und Verstärkungselementen (4) in eine Herstellform eingespritzt wird, der Faserverbundwerkstoff (2) abgekühlt und die Laufradkomponente (50) entnommen wird.

## Claims

1. A wheel component (50) of a vehicle and in particular of a bicycle, comprising a spoke nipple (50) with a nipple body (55) and two opposite end portions (51, 52) remote from one another, to detachably connect a spoke (10) of a wheel (101, 102) with the rim (10) or the hub (108) of a wheel (101, 102), wherein one of the end portions (51, 52) forms a nipple head (53), and wherein the nipple body (55) has a takeup (54) for an end (30) of a spoke (10), and on the takeup (54), comprises a thread (56) for fastening a spoke (10),
**characterized in**
**that** the nipple body (55) is manufactured from a fibrous composite material (2) and comprises reinforcing elements (4) and at least one matrix material (3), and that the nipple body (55) has at least one tool receiving socket (60), to enable setting and adjusting the spoke tension.

2. The wheel component (50) according to the preceding claim,
wherein the end portions (51, 52) are configured integrally with the nipple body (55) and form an end (58, 59) each of the nipple body (55).

3. The wheel component (50) according to any of the two preceding claims, wherein at least some of the reinforcing elements (4) are configured as reinforcing fibers (5, 6) and extend throughout the length (55a) of the nipple body (55).

4. The wheel component (50) according to any of the three preceding claims, wherein at least part of the reinforcing elements (4) is formed by short fibers (6a) having a length (57) which is shorter than half the length (55a) of the nipple body (55).

5. The wheel component (50) according to any of the four preceding claims, wherein at least part of the reinforcing elements (4) is formed by fiber snips (6b) or reinforcing particles (6c).

6. The wheel component (50) according to any of the five preceding claims, wherein the matrix material (3) of the spoke nipple (50) is uniform.

7. The wheel component (50) according to any of the preceding claims, wherein the material of the reinforcing elements (4) of the spoke nipple (50) in the threaded portion differs from the material of the reinforcing elements (4) remote therefrom.

8. The wheel component (50) according to any of the preceding claims, wherein at least part of the reinforcing elements (4) consists of carbon fiber and/or a glass fiber material.

9. The wheel component (50) according to any of the preceding claims, wherein one portion of the reinforcing elements (4) in the spoke nipple amounts to more than 20% or 25%.

10. The wheel component (50) according to any of the preceding claims, wherein the matrix material comprises a thermoplastic matrix material.

11. The wheel component (50) according to any of the preceding claims, wherein the nipple head (53) comprises a thickening and a rounded end (58), to enable an angular orientation in the case of a two-dimensional contact of the nipple head for example with a rim.

12. The wheel component (50) according to any of the preceding claims, wherein the nipple body (55) is closed on the end (59) opposite the takeup (54).

13. The wheel component (50) according to any of the preceding claims, manufactured by injection molding, wherein a fibrous composite material (2) comprising a liquid matrix material (3) and reinforcing elements (4) is injected into a manufacturing mold, the fibrous composite material (2) is allowed to cool, and the wheel component (50) is removed.

## Revendications

1. Composant de roue (50) d'un véhicule et en particulier d'une bicyclette, comprenant un écrou de rayon (50) doté d'un corps d'écrou (55) et de deux sections d'extrémité (51, 52) opposées et espacées l'une de l'autre, afin de relier de manière amovible un rayon (10) d'une roue (101, 102) à une jante (10) ou à un moyeu (108) d'une roue (101, 102), dans lequel l'une des sections d'extrémité (51, 52) forme une tête d'écrou (53) et dans lequel le corps d'écrou (55) présente un logement (54) pour une extrémité (30) d'un rayon (10) et comprend un filetage (56) sur le logement (54) pour fixer un rayon (10),
**caractérisé par le fait**
**que** le corps d'écrou (55) est fabriqué à partir d'un matériau composite renforcé aux fibres (2) et comprend des éléments de renforcement (4) et au moins un matériau de matrice (3), et que le corps d'écrou (55) comprend au moins un appui d'outil (60) afin de permettre un réglage d'une tension des rayons.

2. Composant de roue (50) selon la revendication précédente, dans lequel les sections d'extrémité (51, 52) sont formées d'une seule pièce avec le corps d'écrou (55) et constituent chacune une extrémité (58, 59) du corps d'écrou (55).

3. Composant de roue (50) selon l'une quelconque des deux revendications précédentes, dans lequel au moins certains des éléments de renforcement (4) sont conçus en tant que fibres de renforcement (5, 6) et s'étendent sur une longueur (55a) du corps d'écrou (55).

4. Composant de roue (50) selon l'une quelconque des trois revendications précédentes, dans lequel au moins une partie des éléments de renforcement (4) est constituée de fibres courtes (6a) qui présentent une longueur (57) laquelle est inférieure à la moitié d'une longueur (55a) du corps d'écrou (55).

5. Composant de roue (50) selon l'une quelconque des quatre revendications précédentes, dans lequel au moins une partie des éléments de renforcement (4) est constituée de fragments de fibres (6b) ou de particules de renforcement (6c).

6. Composant de roue (50) selon l'une quelconque des cinq revendications précédentes, dans lequel le matériau de matrice (3) de l'écrou de rayon (50) est uniforme.

7. Composant de roue (50) selon l'une quelconque des revendications précédentes, dans lequel le matériau des éléments de renforcement (4) de l'écrou de rayon (50) dans la section filetée diffère du matériau des éléments de renforcement (4) situés plus loin.

8. Composant de roue (50) selon l'une quelconque des revendications précédentes, dans lequel au moins une partie des éléments de renforcement (4) est constituée de matériau en fibres de carbone et/ou en fibres de verre.

9. Composant de roue (50) selon l'une quelconque des revendications précédentes, dans lequel une proportion des éléments de renforcement (4) dans l'écrou de rayon est supérieure à 20 % ou 25 %.

10. Composant de roue (50) selon l'une quelconque des revendications précédentes, dans lequel le matériau de matrice est un matériau de matrice thermoplastique.

11. Composant de roue (50) selon l'une quelconque des revendications précédentes, dans lequel la tête d'écrou (53) présente un épaississement et une extrémité arrondie (58) afin de permettre un alignement angulaire lorsque la tête d'écrou est en appui plan sur, par exemple, une jante.

12. Composant de roue (50) selon l'une quelconque des revendications précédentes, dans lequel le corps d'écrou (55) est fermé à l'extrémité (59) opposée au logement (54).

13. Composant de roue (50) selon l'une quelconque des revendications précédentes, fabriqué par un procédé de moulage par injection dans lequel un matériau composite renforcé aux fibres (2) est injecté avec un matériau de matrice liquide (3) et des éléments de renforcement (4) dans un moule de fabrication, le matériau composite renforcé aux fibres (2) est refroidi et le composant de roue (50) est démoulé.
